# EUROPÄISCHE PATENTSCHRIFT

(11) **EP 0 313 743 B1**
(45) Veröffentlichungstag und Bekanntmachung des Hinweises auf die Patenterteilung: **03.02.1993**
(21) Anmeldenummer: 88113073.6
(22) Anmeldetag: 11.08.1988
(51) Int. Cl.: H02J 9/06, H02M 3/335

(54) **Schaltnetzteil**
Switching power supply
Alimentation à découpage

(30) Priorität: 27.10.1987 DE 3736372
(43) Veröffentlichungstag der Anmeldung: 03.05.1989
(73) Patentinhaber: Siemens Nixdorf Informationssysteme Aktiengesellschaft, 33102 Paderborn (DE)
(72) Erfinder: Fuchs, Erich, D-4790 Paderborn 2 (DE)
(74) Vertreter: Schaumburg, Thoenes, Thurn Patentanwälte

(56) Entgegenhaltungen:
- GB-A- 2 120 474
- GB-A- 2 182 510
- US-A- 4 564 767

## Beschreibung

Die Erfindung betrifft ein Schaltnetzteil, bei dem ein mit der Primärwicklung eines Wandlerübertragers und der gleichgerichteten Netzwechselspannung in Reihe geschalteter Schalttransistor durch erste Steuerimpulse periodisch leitend gesteuert wird und dadurch in der Sekundärwicklung Stromimpulse induziert werden, deren Energie zur Erzeugung einer Ausgangsgleichspannung genutzt wird, wobei ein Batteriestromzweig vorgesehen ist, in dem ein weiterer Schalttransistor durch zweite Steuerimpulse leitend gesteuert wird und Energie zur Erzeugung einer Ausgangsgleichspannung liefert, wenn die Netzwechselspannung ausfällt.

Ein Schaltnetzteil dieser Art ist aus der DE-OS 36 37 560 bekannt. Bei ihm wird der Batteriestromzweig wirksam geschaltet, wenn die Netzwechselspannung ausfällt, damit die Funktionen eines Verbrauchers nach dem Netzausfall noch für eine gewisse Zeit aufrecht erhalten werden können. Es ist hierzu eine besondere Überwachungsschaltung vorgesehen, die die Steuerimpulse abhängig vom Vorhandensein der Netzwechselspannung entweder dem ersten oder dem zweiten Schalttransistor zuführt. Wenn die Steuerimpulse dem zweiten Schalttransistor zugeführt werden, so werden die mit ihm im Batteriestromzweig erzeugten Stromimpulse direkt einem Ausgangsfilter bzw. dem Verbraucher zugeführt.

Dieses vorbekannte Prinzip einer Notstromversorgung bei Schaltnetzteilen bedingt einen hohen Steuer- und Energieübertragungsaufwand. Neben der Überwachungsschaltung zur Umschaltung der Steuerimpulse zwischen einem ersten und einem zweiten Steuerweg ist bei Erzeugung mehrerer Ausgangsspannungen für jede Ausgangsspannung ein besonderer Batteriestromzweig zu deren Aufrechterhalten bei Netzausfall erforderlich.

Es ist Aufgabe der Erfindung, den Aufbau eines Schaltnetzteils mit Notstromversorgung so zu vereinfachen, daß bei Netzausfall eine selbsttätige Umschaltung auf die Notstromversorgung unabhängig von einer besonderen Überwachung der Netzwechselspannung erfolgt und eine einzige Notstrombatterie auch zur Erzeugung mehrerer Ausgangsspannungen benutzt werden kann.

Diese Aufgabe wird für ein Schaltnetzteil der eingangs genannten Art erfindungsgemäß dadurch gelöst, daß der Batteriestromzweig der Sekundärwicklung des Wandlerübertragers parallelgeschaltet ist und so gepolt ist, daß ein Strompfad von der Batterie über die Sekundärwicklung und dem Schalttransistor zur Batterie entsteht und daß der zweite Schalttransistor während der jeweiligen Leitphase des ersten Schalttransistors, jedoch gegenüber dieser später beginnend und früher endend, leitend gesteuert wird.

Die Erfindung beruht auf dem Grundgedanken, bei einem Stromversorgungsgerät nicht dem Verbraucher, sondern dem Generator für die Verbraucherleistung einen Batteriestromzweig parallelzuschalten, der bei Netzausfall automatisch wirksam wird und dem Wandlerübertrager Stromimpulse zuführt, die den zuvor durch die Netzspeisung gelieferten Stromimpulsen entsprechen. Durch die erfindungsgemäße Steuerung wird erreicht, daß beide Schalttransistoren gleichartig arbeiten. Dies ist zum Beispiel durch eine entsprechende Bemessung der ersten und zweiten Steuerimpulse möglich.

Dabei kann der Batteriestromzweig über den zweiten Schalttransistor aber nur dann einen impulsartigen Strom in die Sekundärwicklung des Wandlerübertragers einspeisen, wenn keine Speisung des Wandlerübertragers von der Primärseite her erfolgt. Dies wird durch die Potentialverhältnisse an der Sekundärwicklung des Wandlerübertragers in Verbindung mit der Stromrichtungsabhängigkeit des Batteriestromzweiges gewährleistet. Ohne eine besondere Überwachung der Netzwechselspannung wird also die Funktion der Einspeisung eines impulsartigen Stromes in die Sekundärwicklung des Wandlerübertragers durch den Batteriestromzweig bei einem Netzausfall unterbrechungsfrei und automatisch übernommen. Alle übrigen Funktionen auf der Sekundärseite des Schaltnetzteils können unverändert bleiben, insbesondere die Erzeugung unterschiedlich großer Ausgangsspannungen aus mehreren Sekundärwicklungen oder aus Anzapfungen einer Sekundärwicklung des Wandlerübertragers, so daß auch in diesem Fall nur eine einzige Notstrombatterie erforderlich ist.

Wenn in dem Batteriestromzweig eine Diode angeordnet ist, die gleichsinnig mit dem weiteren Schalttransistor und der Batterie gepolt ist, so wird die durch den Schalttransistor bereits vorgegebene Stromrichtungsabhängigkeit des Batteriestromzweiges weiter verbessert, so daß die automatische Umschaltung auf die Notstromversorgung auch bei relativ hohen Potentialwerten an der Sekundärwicklung des Wandlerübertragers zuverlässig auf den Netzausfall beschränkt bleibt.

Durch die gleichartige Steuerung der beiden Schalttransistoren bietet die Erfindung den wesentlichen Vorteil, daß der zweite Schalttransistor in eine Regelung, wie sie üblicherweise bei Schaltnetzteilen für den primärseitigen Schalttransistor vorgesehen ist, einbezogen werden kann. Demgemäß zeichnet sich eine Weiterbildung der Erfindung dadurch aus, daß die ersten und die zweiten Steuerimpulse mit einem abhängig von der Ausgangsspannung pulslängenmodulierten Impulsgenerator erzeugt werden. Dies hat den Vorteil, daß auch bei Netzausfall die Ausgangsspannung trotz abnehmender Batteriespannung noch konstant gehalten werden kann, da auch die zweiten Steuerimpulse für den zweiten Schalttransistor abhängig von der Ausgangsspannung pulslängenmoduliert werden. Gleichzeitig ergibt sich der Vorteil, daß durch das Weiterbestehen der ersten Steuerimpulse für den primärseitigen Schalttransistor bei Wiederherstellung der Netzstromversorgung eine unterbrechungsfreie Übernahme der Speisung durch das Netz erfolgt.

Vorteilhaft ist der Reihenschaltung des weiteren Schalttransistors mit der Diode die Reihenschaltung eines Ladestromreglers mit einer weiteren Diode parallelgeschaltet, die für die in der Sekundärwicklung induzierten Stromimpulse durchlässig ist.

Durch diese Weiterbildung wird in noch zu beschreibender Weise ein Aufladen der Batterie während der Leitphasen des primärseitigen Schalttransistors erreicht.

Bei Verwendung einer Regelschaltung zur Erzeugung der ersten und zweiten Steuerimpulse kann auch in einfacher Weise eine Überwachung der Batteriespannung vorgesehen werden, die innerhalb der Regelschaltung ein Sperren der zweiten Steuerimpulse veranlaßt, wenn die Batteriespannung unter einen vorgegebenen Wert abfällt. Dadurch wird eine Tiefentladung der Batterie bei zu langem Netzausfall vermieden. In einer Weiterbildung der Erfindung ist eine derartige Schaltmaßnahme mit einer vorherigen Signalisierung verbunden.

Ausführungsbeispiele der Erfindung werden im folgenden an Hand der Figuren beschrieben. Es zeigen:
- Fig. 1: ein Prinzipschaltbild eines Sperrwandler-Schaltnetzteils mit Batteriestromzweig,
- Fig. 2: Strom- und Spannungsverläufe in der in Fig. 1 gezeigten Schaltung,
- Fig. 3: eine mögliche Ausführungsform einer Regelschaltung in dem in Fig. 1 gezeigten Schaltnetzteil und
- Fig. 4: ein Prinzipschaltbild eines Durchflußwandler-Schaltnetzteils mit Batteriestromzweig.

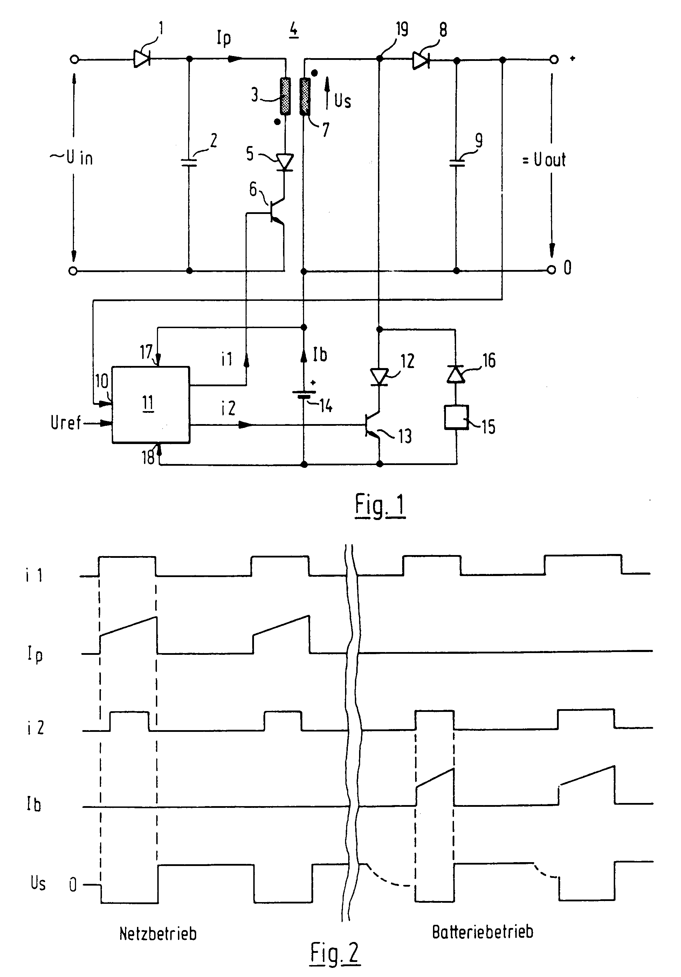

In Fig. 1 ist die Schaltung eines Schaltnetzteils dargestellt, das in Sperrwandlerschaltung arbeitet und von einer Netzwechselspannung Uin gespeist wird. Die Netzwechselspannung wird mit einem Gleichrichter 1 gleichgerichtet und die so erhaltene pulsierende Gleichspannung mit einem Kondensator 2 geglättet. Die geglättete Gleichspannung liegt an der Reihenschaltung der Primärwicklung 3 eines Wandlerübertragers 4, einer Diode 5 und eines npn-Schalttransistors 6. Wird der Schalttransistor 6 durch erste Steuerimpulse i1 impulsartig leitend gesteuert, so wird in bekannter Weise durch den primärseitigen impulsartigen Schaltstrom Ip jeweils an der Sekundärwicklung 7 des Wandlerübertragers 4 eine Sekundärspannung Us induziert, deren Richtung durch den zur Primärwicklung 3 entgegengesetzten Wickelsinn der Sekundärwicklung 7 bestimmt ist und die beim Übergang des primärseitigen Schalttransistors 6 in den Sperrzustand jeweils umgepolt wird so daß dann die im Wandlerübertrager 4 gespeicherte Energie über einen weiteren Gleichrichter 8 einem Glättungskondensator 9 zugeführt werden kann, an dem eine Ausgangsgleichspannung Uout erscheint, die zur Speisung eines Verbrauchers genutzt werden kann. Die Steuerimpulse i1 werden von einer Regelschaltung 11 geliefert, die ihrerseits von der Ausgangsspannung Uout an ihrem Steuereingang 10 angesteuert wird und die Länge der Steuerimpulse i1 abhängig von dem Verhältnis zu einer Referenzspannung Uref derart einstellt, daß sich eine weitgehend konstante Ausgangsgleichspannung Uout ergibt.

Anstelle einer Pulslängenmodulation kann in der Regelschaltung 11 auch eine Frequenzmodulation der Steuerimpulse 11 vorgesehen sein.

Die vorstehend beschriebene Funktion ist für Schaltnetzteile in Sperrwandlerschaltung bekannt. Im folgenden wird die bei der in Fig. 1 gezeigten Schaltungsanordnung zusätzliche Notstromversorgung beschrieben.

Der Sekundärwicklung 7 des Wandlerübertragers 4 ist ein Batteriestromzweig parallelgeschaltet, der eine Diode 12, einen zweiten npn-Schalttransistor 13 und eine Batterie 14 enthält. Die Batterie 14 liegt mit ihrem positiven Anschluß an dem Nullpotential des Sekundärstromkreises, und die Diode 12 und der Schalttransistor 13 sind in Durchlaßrichtung für einen Strom Ib gepolt, der von der Batterie 14 geliefert wird. Der Schalttransistor 13 wird durch Steuerimpulse i2 leitend gesteuert, die wie die Steuerimpulse i1 von der Regelschaltung 11 geliefert werden, jedoch gegenüber diesen später beginnen und früher enden.

Der Reihenschaltung der Diode 12 mit dem Schalttransistor 13 ist die Reihenschaltung eines Ladestromreglers 15 mit einer weiteren Diode 16 parallelgeschaltet. Die Diode 16 ist zur Diode 12 entgegengesetzt gepolt. Diese Reihenschaltung dient zur Aufladung der Batterie 14 während der Schaltphasen des primärseitigen Schalttransistors 6.

Die Batterie 14 ist mit Steuereingängen 17 und 18 der Regelschaltung 11 verbunden, so daß die Batteriespannung in der Regelschaltung 11 überwacht werden kann und abhängig davon eine noch zu beschreibende Abschaltung der Steuerimpulse i2 erfolgt.

Im folgenden wird an Hand der Fig. 2 die Arbeitsweise der in Fig. 1 gezeigten Schaltungsanordnung erläutert. Fig. 2 zeigt Signalverläufe innerhalb des Schaltnetzteils. Dabei ist zu erkennen, daß die Steuerimpulse i1 und i2 eine im wesentlichen übereinstimmende Phasenlage haben, daß jedoch die Steuerimpulse i2 später beginnen und früher enden als die Steuerimpulse i1. Die Steuerimpulse i1 und i2 sind also gleichartig, jedoch unterschiedlich lang. Bei jedem Steuerimpuls i1 fließt ein Strom Ip durch die Primärwicklung 3 des Wandlerübertragers 4, da der Steuerimpuls i1 den Schalttransistor 6 leitend steuert. Der Strom Ip hat einen weitgehend linearen Anstieg, der durch die Induktivität der Primärwicklung 3 des Wandlerübertragers 4 verursacht wird, und eine Länge, die der Länge des Steuerimpulses i1 entspricht. Es ergeben sich entsprechend die in Fig. 2 für Netzbetrieb dargestellten Stromimpulse Ip. Während dieser Stromimpulse Ip wird an der Sekundärwicklung 7 des Wandlerübertragers 4 eine Sekundärspannung Us induziert, die an dem Anschluß 19 (Fig. 1) der Sekundärwicklung 7 negativ gegenüber dem sekundärseitigen Nullpotential ist. Dies ergibt sich aus dem unterschiedlichen Wickelsinn der beiden Wicklungen 3 und 7 des Wandlerübertragers 4, der in Fig. 1 durch Punkte an den Wicklungsenden dargestellt ist. Wenn der primärseitige jeweilige Stromimpuls Ip beendet wird, so wird die Spannung an dem Anschluß 19 der Sekundärwicklung 7 des Wandlerübertragers 4 umgepolt, so daß sie gegenüber Nullpotential positiv wird. Dann kann während der Sperrphase des primärseitigen Schalttransistors 6 die im Wandlerübertrager 4 gespeicherte elektrische Energie an einen sekundärseitigen Verbraucher abgegeben werden. Es fließt dann ein Strom über den sekundärseitigen Gleichrichter 8 zum Verbraucher. Die Ausgangsgleichspannung Uout wird dabei mit dem Kondensator 9 geglättet.

Bei Netzbetrieb wiederholen sich die vorstehend beschriebenen Vorgänge periodisch. Dabei wird der sekundärseitige Schalttransistor 13 im Batteriestromzweig gleichartig mit dem primärseitigen Schalttransistor 6 durch die Steuerimpulse i2 leitend gesteuert. Ein Stromfluß in dem Batteriestromzweig wird dabei aber verhindert, denn während des Steuerimpulses i2 führt der Anschluß 19 der Sekundärwicklung 7 (Fig. 1) gegenüber dem negativen Pol der Batterie 14 negatives Potential, gegenüber dem die Diode 12 bzw. der Schalttransistor 13 in Sperrichtung gepolt ist. Während des Steuerimpulses i2 kann also die Batterie im Netzbetrieb nicht entladen werden. Sie wird hingegen in einem Stromkreis aufgeladen, der für das negative Potential am Anschluß 19 der Sekundärwicklung 7 in Durchlaßrichtung gepolt ist und über die Diode 16 sowie den Laderegler 15 verläuft. Wenn bei Ende des jeweiligen Steuerimpulses i1 die Umpolung am Anschluß 19 der Sekundärwicklung 7 auf positives Potential erfolgt, ist der sekundärseitige Schalttransistor 13 bereits wieder gesperrt und der Ladestromzweig mit der Diode 16 und dem Ladestromregler 15 für dieses Potential in Sperrichtung gepolt.

Hier ist nun der Sinn des gegenüber den Steuerimpulsen i1 späteren Beginns und früheren Endens der Steuerimpulse i2 zu erkennen: Da jeweils eine gewisse Zeit erforderlich ist, bis sich am Anschluß 19 das negative Potential aufgebaut hat, soll der Schalttransistor 13 erst nach dieser Zeit durchschalten, ohne einen Batteriestrom fließen zu lassen. Der Schalttransistor 13 soll dann vor dem Schalttransistor 6 sperren, damit er durch das am Anschluß 19 wieder entstehende positive Potential nicht mit einem hohen Strom belastet wird.

Bei einem Netzausfall verschwinden die Stromimpulse Ip, obwohl der primärseitige Schalttransistor 6 impulsartig leitend gesteuert wird. Der Anschluß 19 der Sekundärwicklung 7 des Wandlerübertragers, der am Ende eines jeweiligen primärseitigen Stromimpulses Ip positives Potential gegenüber dem sekundärseitigen Nullpotential führt, verringert sein positives Potential nun, ohne daß eine erneute Umschaltung auf negatives Potential erfolgt. Dieser Vorgang ist in Fig. 2 für Batteriebetrieb als gestrichelter Potentialabfall dargestellt. Die in dem Wandlerübertrager 4 während der letzten Schaltphase des primärseitigen Schalttransistors 6 gespeicherte Energie wird somit voll in den Kondensator 9 bzw. zu einem sekundärseitigen Verbraucher übertragen, und der Anschluß 19 der Sekundärwicklung 7 des Wandlerübertragers 4 nimmt das sekundärseitige Nullpotential an. Dieser Zustand bewirkt, daß beim nächsten Steuerimpuls i2 ein Batteriestrom Ib durch die Sekundärwicklung 7 des Wandlerübertragers 4 fließen kann, der wie ein Stromimpuls Ip negatives Potential am Anschluß 19 gegenüber dem sekundärseitigen Nullpotential erzeugt, welches am Ende des Steuerimpulses i2 wieder zu einem positiven Wert umgepolt wird. Die auf diese Weise im Wandlerübertrager 4 gespeicherte Energie kann dann an den sekundärseitig angeschalteten Verbraucher bzw. den Kondensator 9 abgegeben werden, ohne daß zwischen Netzausfall und Batteriestromversorgung eine Stromunterbrechung stattgefunden hat.

Da die Steuerimpulse i2 kürzer als die Steuerimpulse i1 sind, würde die Ausgangsgleichspannung Uout normalerweise absinken. Dies führt aber in der Regelschaltung 11 zu einer Verlängerung der Steuerimpulse i1 und i2. Dies ist für den Batteriebetrieb in Fig. 2 rechts dargestellt. Durch die Verlängerung ergibt sich eine entsprechende Verlängerung der Batteriestromimpulse Ib, durch die eine vorgegebene Ausgangsgleichspannung Uout aufrecht erhalten werden kann und der für den Batteriebetrieb in Fig. 2 gestrichelt dargestellte Potentialabfall in den positiven Teilen der Sekundärspannung Us schließlich verschwindet. Das Weiterbestehen der Steuerimpulse i1 für den Schalttransistor 6 auch während des Batteriebetriebs hat den Vorteil, daß bei Wiedereinsetzen der Netzstromversorgung eine sofortige Energielieferung durch das Netz erfolgt.

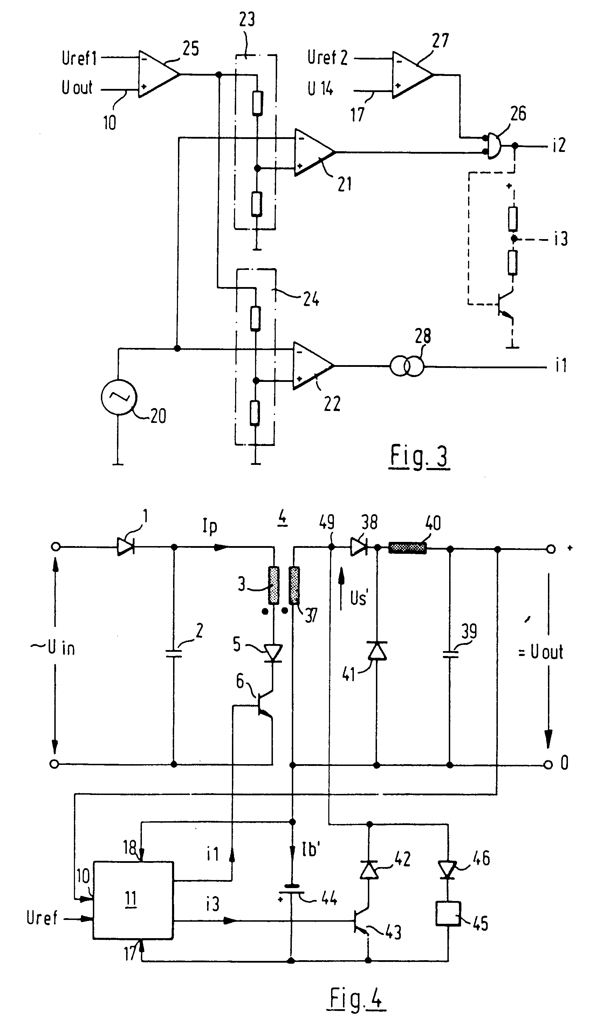

In Fig. 3 ist eine mögliche Ausführungsform der in Fig. 1 gezeigten Regelschaltung 11 dargestellt. Sie enthält einen Dreieckwellengenerator 20 bekannter Art, dessen Ausgangssignal auf die invertierenden Eingänge zweier Komparatoren 21 und 22 geführt ist. Die nicht invertierenden Eingänge dieser Komparatoren 21 und 22 sind jeweils mit dem Abgriff eines Spannungsteilers 23 bzw. 24 verbunden. Beide Spannungsteiler 23 und 24 sind mit dem Ausgang eines Operationsverstärkers 25 verbunden, dessen invertierendem Eingang eine Referenzspannung Uref1 und dessen nicht invertierendem Eingang 10 die Ausgangsgleichspannung Uout des Schaltnetzteils zugeführt wird. Der Ausgang des Komparators 21 ist mit dem ersten negierenden Eingang eines konjunktiven Verknüpfungsgliedes 26 verbunden, dessen zweiter negierender Eingang das Ausgangssignal eines weiteren Komparators 27 erhält, dessen invertierendem Eingang eine Referenzspannung Uref2 und dessen nicht invertierendem Eingang 17 die Batteriespannung U14 der Batterie 14 (Fig. 1) zugeführt wird. Der Komparator 22 liefert über eine Entkopplungsschaltung 28, die die galvanische Trennung zwischen dem Stromversorgungsnetz und der Sekundärseite des Schaltnetzteils bewirkt, die Steuerimpulse i1. Das Verknüpfungsglied 26 liefert die Steuerimpulse i2.

Im folgenden wird die Wirkungsweise der in Fig. 3 gezeigten Schaltungsanordnung beschrieben. Das Ausgangssignal des Operationsverstärkers 25 ist die Stellgröße für die Regelschaltung. Dieses Signal steigt mit zunehmender Ausgangsgleichspannung Uout an und fällt mit ihr ab. Es dient zur Erzeugung einer Schwellenspannung für die Komparatoren 21 und 22 mit den Spannungsteilern 23 und 24. Am Ausgang der Komparatoren 21 und 22 erscheint demgemäß immer dann ein 0 Volt-Signal, wenn die Amplitude des von dem Generator 20 gelieferten Dreiecksignals die jeweilige Schwellenspannung überschreitet. Im Hinblick auf die Dreieckform des von dem Generator 22 gelieferten Dreiecksignals wird also die Länge der von den Komparatoren 21 und 22 gelieferten Ausgangssignale durch das Ausgangssignal des Operationsverstärkers 25 bestimmt. Die Spannungsteiler 23 und 24 sind auf solche Teilungsverhältnisse eingestellt, daß der Komparator 22 eine niedrigere Schwellenspannung als der Komparator 21 erhält. Dadurch beginnt das Ausgangssignal des Komparators 22 früher und endet später als das des Komparators 21.

Der Komparator 27 gibt an seinem Ausgang ein positives Signal ab, sobald die Batteriespannung U14 die Referenzspannung Uref2 unterschreitet. Damit ist die Durchschaltebedingung für das konjunktive Verknüpfungsglied 26 nicht mehr gegeben, und die Steuerimpulse i2 verschwinden. Dadurch wird der Schalttransistor 13 (Fig. 1) bleibend gesperrt.

In Fig. 4 ist ein Durchflußwandler-Schaltnetzteil dargestellt, bei dem die Erfindung verwirklicht ist. Diese Schaltungsanordnung gleicht derjenigen nach Fig. 1. Deshalb sind für die primärseitigen Schaltelemente und die Regelschaltung, die Steuerimpulse i1 und i3 liefert, dieselben Bezugszeichen wie in Fig. 1 verwendet. Entsprechend dem Prinzip des Durchflußwandlers hat aber die Sekundärwicklung 37 des Wandlerübertragers 4 denselben Wicklungssinn wie die Primärwicklung 3, was durch entsprechende Punkte an den Wicklungen 3 und 37 gekennzeichnet ist und durch eine gegenüber Fig. 1 andere Richtung der Spannung Us′ deutlich wird. Der in der Schaltphase des primärseitigen Schalttransistors 6 sekundärseitig induzierte Stromimpuls wird unmittelbar über den Gleichrichter 38 und die beim Durchflußwandler erforderliche Speicherdrossel 40 in den Glättungskondensator 39 eingespeichert. Der Speicherdrossel 40 ist eine für den Durchflußwandler ferner erforderliche Freilaufdiode 41 vorgeschaltet.

Als zweiter Schalttransistor im Batteriestromzweig dient ein pnp-Transistor 43, der mit einer Diode 42 in Reihe geschaltet ist. Diese Diode 42 und eine ferner vorhandene Batterie 44 sind so gepolt, daß bei Netzspeisung der Batteriestromzweig gegenüber positivem Potential am Anschluß 49 der Sekundärwicklung 37 gesperrt ist, gleichzeitig aber die Batterie 44 über eine Reihenschaltung aus einer Diode 46 und einem Ladestromregler 45, die analog zu Fig. 1 der Reihenschaltung aus Diode 42 und Schalttransistor 43 parallelgeschaltet ist, geladen wird. Der Schalttransistor 43 wird durch die Steuerimpulse i3 aus der Regelschaltung 11 angesteuert. Diese Steuerimpulse entsprechen den Steuerimpulsen i2 (Fig. 2), haben jedoch gegenüber diesen entgegengesetztes Vorzeichen. Die Erzeugung dieser Steuerimpulse i3 mit einem durch die Steuerimpulse i2 angesteuerten npn-Transistor ist bei der in Fig. 3 gezeigten Schaltungsanordnung gestrichelt angedeutet.

Infolge der anderen Stromrichtungsabhängigkeit des in Fig.4 gezeigten Batteriestromzweiges ergibt sich bei Netzausfall während des jeweils leitenden Zustands des Schalttransistors 43 ein Stromimpuls Ib′, der dem Stromimpuls entspricht, welcher bei vorhandener Netzspeisung in der Sekundärwicklung 37 induziert wird. Dies ist darauf zurückzuführen, daß bei Netzausfall das positive Potential am Anschluß 49 der Sekundärwicklung 37 verschwindet und dann in der Schaltphase des Schalttransistors 42 der Anschluß 49 jeweils gegenüber dem positiven Pol der Batterie 44 negatives Potential führt.

Die in den Schaltungsanordnungen nach Fig. 1 und 4 vorgesehenen Dioden 12 und 42 sind nicht erforderlich, wenn ein Schalttransistor 13 bzw. 43 verwendet wird, der so dimensioniert ist, daß er bei Anliegen des jeweils am Anschluß 19 bzw. 49 herrschenden Sperrpotentials nicht in den Inversbetrieb übergehen kann.

## Patentansprüche

1. Schaltnetzteil, bei dem ein mit der Primärwicklung (3) eines Wandlerübertragers (4) und der gleichgerichteten Netzwechselspannung in Reihe geschalteter Schalttransistor (6) durch erste Steuerimpulse periodisch leitend gesteuert wird und dadurch in der Sekundärwicklung (7,37) Stromimpulse induziert werden, deren Energie zur Erzeugung einer Ausgangsgleichspannung genutzt wird, wobei ein Batteriestromzweig vorgesehen ist, in dem ein weiterer Schalttransistor (13,43) durch zweite Steuerimpulse leitend gesteuert wird und Energie zur Erzeugung einer Ausgangsgleichspan nung liefert, wenn die Netzwechselspannung ausfällt, dadurch **gekennzeichnet,** daß der Batteriestromzweig der Sekundärwicklung (7, 37) des Wandlerübertragers (4) parallelgeschaltet ist und so gepolt ist, daß ein Strompfad von der Batterie (14,44) über die Sekundärwicklung (7,37) und dem Schalttransistor (13,43) zur Batterie (14,44) entstehet und daß der zweite Schalttransistor (13, 43) während der jeweiligen Leitphase des ersten Schalttransistors (6), jedoch gegenüber dieser später beginnend und früher endend leitend gesteuert wird.

2. Schaltnetzteil nach Anspruch 1 dadurch **gekennzeichnet**, daß die zweiten Steuerimpulse (i2) während der ersten Steuerimpulse (i1), jedoch gegenüber diesen später beginnend und früher endend, erzeugt werden.

3. Schaltnetzteil nach Anspruch 1 oder 2, dadurch **gekennzeichnet**, daß in dem Batteriestromzweig eine Diode (12, 42) angeordnet ist, die gleichsinnig mit dem weiteren Schalttransistor (13, 43) und der Batterie (14, 44) gepolt ist.

4. Schaltnetzteil nach Anspruch 2 oder 3, dadurch **gekennzeichnet**, daß die ersten und die zweiten Steuerimpulse (i1, i2) mit einem abhängig von der Ausgangsspannung pulslängenmodulierten Impulsgenerator (11) erzeugt werden.

5. Schaltnetzteil nach einem der vorhergehenden Ansprüche, dadurch **gekennzeichnet**, daß der Reihenschaltung des weiteren Schalttransistors (13, 43) mit der Diode (12, 42) die Reihenschaltung eines Ladestromreglers (15, 45) mit einer weiteren Diode (16, 46) parallelgeschaltet ist, die für die in der Sekundärwicklung (7, 37) induzierten Stromimpulse durchlässig ist.

6. Schaltnetzteil nach einem der vorhergehenden Ansprüche, dadurch **gekennzeichnet**, daß die zweiten Steuerimpulse (i2) bei Abfall der Batteriespannung unter einen vorgegebenen Wert gesperrt werden.

7. Schaltnetzteil nach Anspruch 6, dadurch **gekennzeichnet**, daß eine vor der Sperrung der zweiten Steuerimpulse aktivierbare Signalisiervorrichtung vorgesehen ist.

## Claims

1. Switched-mode power supply in which a switching transistor (6) which is connected in series with the primary winding (3) of a transformer (4) and the rectified alternating mains voltage is periodically actuated by first control pulses and as a result current pulses are induced in the secondary winding (7, 37), the energy of said pulses being utilised to generate a DC output voltage, a battery circuit branch being provided in which a further switching transistor (13, 43) is actuated by second control pulses and supplies energy for generating a DC output voltage when the alternating mains voltage fails, characterised in that the battery circuit branch is connected in parallel with the secondary winding (7, 37) of the transformer (4) and is poled in such a way that a current path is produced from the battery (14, 44) to the battery (14, 44) via the secondary winding (7, 37) and the switching transistor (13, 43), in that the second switching transistor (13, 43) is actuated during the respective conductor phase of the first switching transistor (6) but so as to begin later and end earlier with respect to the latter.

2. Switched-mode power supply according to Claim 1, characterised in that the second control pulses (i2) are generated during the first control pulses (i1) but so as to begin later and end earlier with respect to the latter.

3. Switched-mode power supply according to Claim 1 or 2, characterised in that a diode (12, 42) which is poled in the same direction as the other switching transistor (13, 43) and as the battery (14, 44) is arranged in the battery circuit branch.

4. Switched-mode power supply according to Claim 2 or 3, characterized in that the first and the second control pulses (i1, i2) are generated with a pulse generator (11) which is pulse length-modulated as a function of the output voltage.

5. Switched-mode power supply according to one of the preceding claims, characterised in that the series circuit of a charge current regulator (15, 45) with a further diode (16, 46) is connected in parallel with the series circuit of the further switching transistor (13, 43) with the diode (12, 42), which further diode conducts the current pulses induced in the secondary winding (7, 37).

6. Switched-mode power supply according to one of the preceding claims, characterised in that the second control pulses (i2) are inhibited when the battery voltage falls below a predetermined value.

7. Switched-mode power supply according to Claim 6, characterised in that a signalling device is provided which can be actuated before the second control pulses are inhibited.

## Revendications

1. Bloc commuté d'alimentation par le secteur, dans lequel un transistor de commutation (6), qui est branché en série avec l'enroulement primaire (3) d'un transformateur (4) et avec la tension alternative redressée du secteur, est périodiquement commandé à l'état passant par des premières impulsions de commande et induit de ce fait, dans l'enroulement secondaire (7,37), des impulsions de courant, dont l'énergie est utilisée pour produire une tension continue de sortie, et dans lequel il est prévu une branche de circulation du courant d'une batterie, dans laquelle un autre transistor de commutation (13;43) est commandé à l'état passant par des secondes impulsions de commande, et qui délivre une énergie servant à produire une tension continue de sortie en cas de défaillance de la tension alternative du secteur, caractérisé par le fait que la branche de passage du courant de la batterie est branchée en parallèle avec l'enroulement secondaire (7,37) du transformateur (4) et est polarisée de telle sorte qu'il apparaît une voie de courant partant de la baterie (14,44) et y revenant en passant par l'enroulement secondaire (7,37) et le transistor de commutation (13,43), et que le second transistor de commutation (13,43) est placé à l'état passant pendant la phase respective de conduction du premier transistor de commutation (6), cette conduction commençant cependant de façon retardée et se terminant de façon précoce par rapport à ce transistor.

2. Bloc commuté d'alimentation par le secteur suivant la revendication 1, caractérisé par le fait que les secondes impulsions de commande (i2) sont produites pendant la première impulsion de commande (i1), mais avec un commencement retardé et une fin précoce par rapport à ces impulsions.

3. Bloc commuté d'alimentation par le secteur suivant la revendication 1 ou 2, caractérisé par le fait que dans la branche de circulation du courant de la batterie est montée une diode (12,42), qui est polarisée dans le même sens que l'autre transistor de commutation (13,43) et que la batterie (14,44).

4. Bloc commuté d'alimentation par le secteur suivant la revendication 2 ou 3, caractérisé par le fait que les premières et les secondes impulsions de courant (i1, i2) sont produites par un générateur d'impulsions (11) qui est modulé selon une modulation d'impulsions en durée, en fonction de la tension de sortie.

5. Bloc commuté d'alimentation par le secteur suivant l'une des revendications précédentes, caractérisé par le fait qu'en parallèle avec le montage série formé de l'autre transistor de commutation (13,43) et la diode (12,42) est branché le montage série formé d'un régulateur (15,45) du courant de charge et d'une autre diode (16,46) qui laisse passer les impulsions de courant induites dans l'enroulement secondaire (7,37).

6. Bloc commuté d'alimentation par le secteur suivant l'une des revendications précédentes, caractérisé par le fait que les secondes impulsions de commande (i2) sont bloquées lorsque la tension aux bornes de la batterie tombe au-dessous d'une valeur prédéterminée.

7. Bloc commuté d'alimentation par le secteur suivant la revendication 6, caractérisé par le fait qu'il est prévu un dispositif de signalisation qui peut être activé avant le blocage des secondes impulsions de commande.
